# EUROPÄISCHE PATENTSCHRIFT

(11) **EP 0 807 556 B1**
(45) Veröffentlichungstag und Bekanntmachung des Hinweises auf die Patenterteilung: **12.09.2001**
(21) Anmeldenummer: 97107357.2
(22) Anmeldetag: 05.05.1997
(51) Int. Cl.: B60R 21/20, B60R 16/00

(54) **Gassack-Modul**
Air bag module
Module pour sac gonflable

(30) Priorität: 15.05.1996 DE 29608809 U
(43) Veröffentlichungstag der Anmeldung: 19.11.1997
(73) Patentinhaber: TRW Occupant Restraint Systems GmbH & Co. KG, 73551 Alfdorf (DE)
(72) Erfinder: Fischer, Anton, 73572 Heuchlingen (DE)
(74) Vertreter: Degwert, Hartmut, Dipl.-Phys.

(56) Entgegenhaltungen:
- DE-A- 4 410 041
- US-A- 5 398 962

## Beschreibung

Die Erfindung betrifft einen Gassack-Modul für ein Fahrzeuglenkrad, mit einem Gassack, einer Gassack-Abdeckung und einer in dieser lösbar angeordneten Schaltfolie.

Diese Schaltfolie, die insbesondere zur Betätigung eines Signalhorns verwendet werden kann, ist üblicherweise in die Gassack-Abdeckung eingegossen. Wenn ein Austausch der Schaltfolie notwendig ist, muß entweder der gesamte Gassack-Modul ersetzt werden, was zu unverhältnismäßig hohen Kosten führt, oder es muß die Gassack-Abdeckung zusammen mit der Schaltfolie ausgetauscht werden. Falls dieser Austausch allerdings nicht korrekt durchgeführt wird, ist nachfolgend möglicherweise die ordnungsgemäße Funktion des gesamten Gassack-Moduls beeinträchtigt.

Aus der DE-A-44 10 041 ist ein gattungsgemäßer Gassack-Modul bekannt, bei dem ein flächig ausgebildeter Hupenschalter lösbar am Modulgehäuse befestigt ist. Allerdings muß zum Austausch des Hupenschalters die Außenabdeckung des Gehäuses demontiert werden.

Die Erfindung schafft einen Gassack-Modul, bei dem die Schaltfolie beliebig ausgetauscht werden kann, ohne daß dadurch hohe Kosten verursacht werden und ohne daß für die Funktionsweise des Gassack-Moduls wesentliche Teile demontiert werden müssen. Zu diesem Zweck ist vorgesehen, daß die Schaltfolie von außen zugänglich am Gassack-Modul befestigt ist, so daß die Schaltfolie ohne Demontage der Gassack-Abdeckung auswechselbar ist.

Vorteilhafte Ausgestaltungen der Erfindung sind in den Ansprüchen 2 bis 5 gegeben. Eine vorteilhafte Ausgestaltung einer Schaltfolie eines erfindungsgemäßen Gassack-Moduls ist in den Ansprüchen 6 und 7 gegeben.

Die Erfindung wird nachfolgend unter Bezugnahme auf zwei Ausführungsformen beschrieben, die in der Zeichnung dargestellt sind. In dieser zeigen:
- Fig. 1 einen Gassack-Modul gemäß einer ersten Ausführungsform der Erfindung; und
- Fig. 2 einen Gassack-Modul gemäß einer zweiten Ausführungsform der Erfindung.

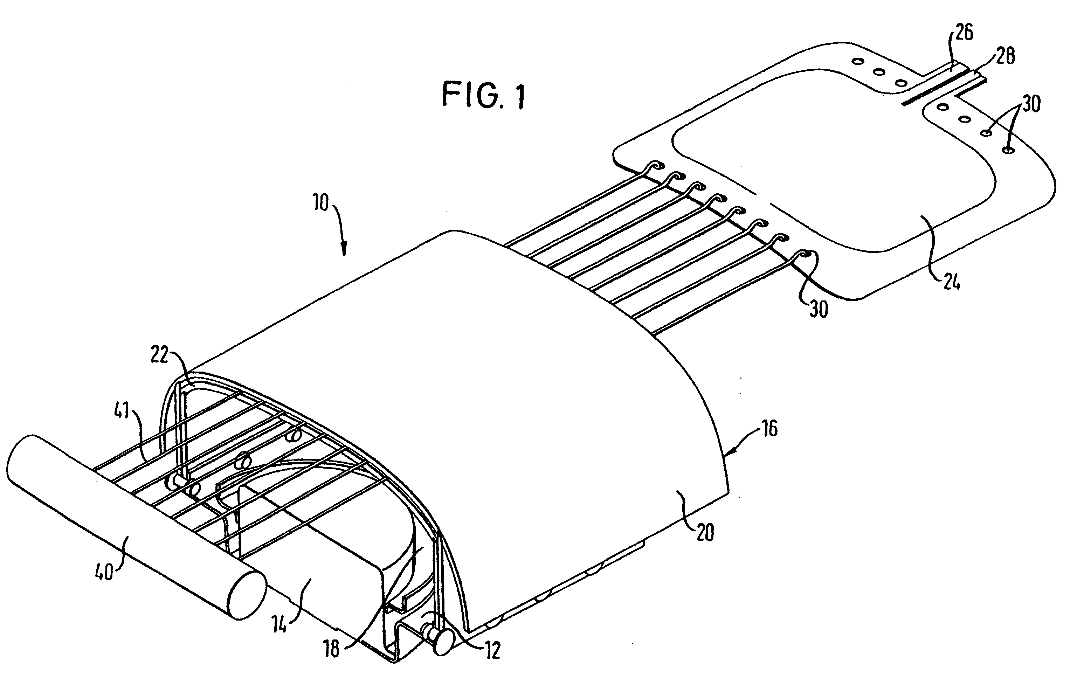

In Fig. 1 ist ein Gassack-Modul 10. gemäß einer ersten Ausführungsform der Erfindung dargestellt. Dieser Gassack-Modul 10 ist für die Anbringung in einem (nicht dargestellten) Fahrzeuglenkrad vorgesehen und weist einen Rahmen 12, einen schematisch dargestellten Gasgenerator 14 und eine Gassack-Abdeckung 16 auf. Im Innenraum 18 zwischen dem Rahmen 12 und der Abdeckung 16 ist ein (nicht dargestellter) Gassack angeordnet, der im Bedarfsfall mittels des Gasgenerators 14 entfaltet wird.

Die Gassack-Abdeckung 16 besteht aus einem dem Außenraum des Gassack-Moduls 10 zugewandten Außenteil 20 und einem zwischen diesem Außenteil 20 und dem Innenraum 18 des Gassack-Moduls angeordneten Innenteil 22. Sowohl das Außenteil 20 als auch das Innenteil 22 sind mit dem Rahmen 12 verbunden.

In den Raum zwischen dem Außenteil 20 und dem Innenteil 22 kann eine Schaltfolie 24 eingeschoben werden, die für die Betätigung beispielsweise eines Signalhorns vorgesehen ist. Die Schaltfolie 24 ist mit zwei Anschlüssen 26, 28 versehen, zwischen denen zur Betätigung des Signalhorns ein elektrischer Kreis geschlossen werden kann. An zwei einander gegenüberliegenden Längsseiten ist die Schaltfolie 24 mit Ausgestaltungen versehen, mittels denen die Schaltfolie 24 seitlich an der Abdeckung 16 befestigt werden kann. Diese Ausgestaltungen sind bei der dargestellten Ausführungsform Befestigungsöffnungen 30, in die geeignete Befestigungsteile der Gassack-Abdeckung 16 eingreifen können. Zum Einsetzen der Schaltfolie 24 in die Gassack-Abdeckung 16, beispielsweise wenn eine defekte Schaltfolie durch ein neues Exemplar ersetzt werden soll, wird von einer Seite der Gassack-Abdeckung 16 ein Montagewerkzeug 40 mit einem schubfesten Abschnitt 41 durch den Raum zwischen dem Außenteil 20 und dem Innenteil 22 hindurchgeschoben, bis es auf der anderen Seite der Gassack-Abdeckung 16 wieder austritt. Dann wird der schubfeste Abschnitt 41 vorzugsweise in die Befestigungsöffnungen 30 der Schaltfolie 24 eingehängt, und durch Herausziehen des Werkzeugs 40 aus der Gassack-Abdeckung 16 kann die Schaltfolie 24 in die Gassack-Abdeckung 16 hineingezogen werden. Am Ende dieses Vorgangs wird das Werkzeug 40 von der Schaltfolie 24 gelöst, und die Schaltfolie 24 wird mittels der Befestigungsöffnungen 30 an der Gassack-Abdeckung 16 festgelegt.

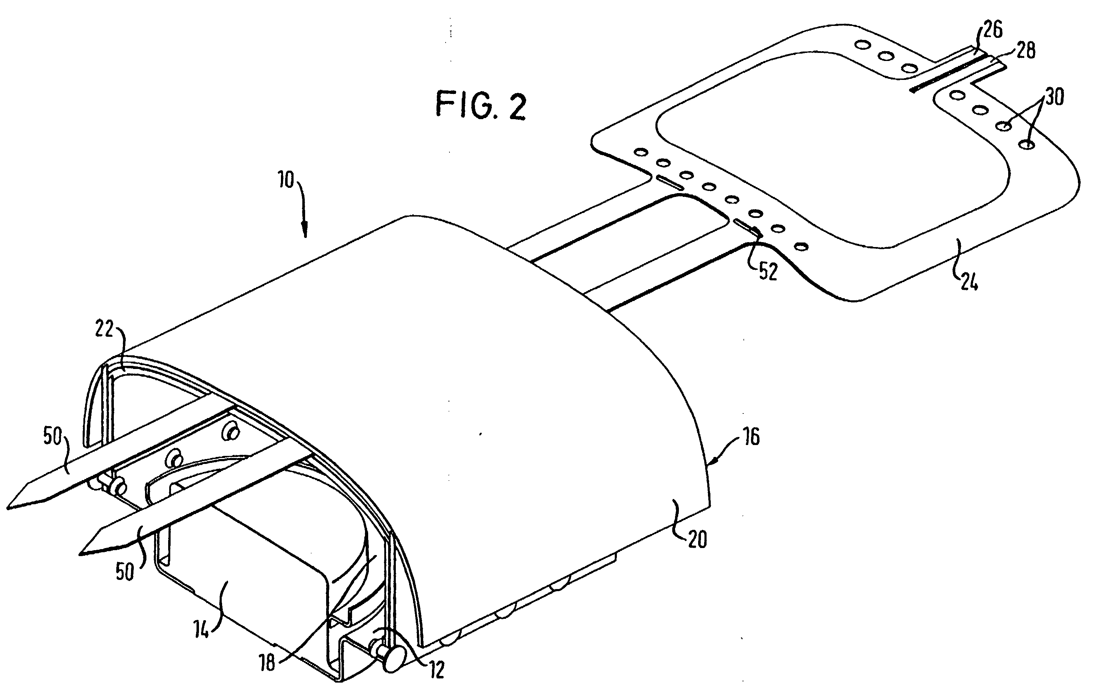

In Fig. 2 ist ein Gassack-Modul gemäß einer zweiten Ausführungsform der Erfindung dargestellt. Soweit Bauteile bei dieser Ausführungsform Bauteilen entsprechen, die aus Fig. 1 bekannt sind, werden dieselben Bezugszeichen verwendet, und es wird auf die entsprechenden Erläuterungen zu Fig. 1 verwiesen.

Bei dem Gassack-Modul gemäß der zweiten Ausführungsform ist die Schaltfolie 24 mit zwei Montagelaschen 50 versehen, die über eine Sollbruchstelle 52 an der Schaltfolie 24 befestigt sind. Diese Montagelaschen 50 können durch die Gassack-Abdeckung 16 zwischen dem Außenteil 20 und dem Innenteil 22 hindurchgeschoben werden, bis sie auf der anderen Seite der Gassack-Abdeckung 16 wieder austreten. Dann wird die Schaltfolie 24 mittels dieser Montagelaschen 50 in die Gassack-Abdeckung 16 hineingezogen, bis sie durch ihre Befestigungsöffnungen 30 an der Gassack-Abdeckung 16 festgelegt werden kann. Abschließend werden die Montagelaschen 50 durch Abreißen oder Abschneiden von der Schaltfolie 24 getrennt.

Durch die Erfindung ist ein Gassack-Modul geschaffen, bei dem in besonders einfacher Weise die in der Gassack-Abdeckung 16 angeordnete Schaltfolie 24 ausgetauscht werden kann, ohne daß funktionswesentliche Teile des Gassack-Moduls demontiert werden müssen oder ein ein vollständiger Austausch des Gassack-Moduls notwendig ist.

## Patentansprüche

1. Gassack-Modul für ein Fahrzeuglenkrad, mit einem Gassack, einer Gassack-Abdeckung (16) und einer in dieser lösbar angeordneten Schaltfolie (24), **dadurch gekennzeichnet, daß** die Schaltfolie (24) von außen zugänglich am Gassack-Modul (10) befestigt ist, so daß die Schaltfolie (24) ohne Demontage der Gassack-Abdeckung (16) auswechselbar ist.

2. Gassack-Modul nach Anspruch 1, **dadurch gekennzeichnet, daß** die Abdeckung (16) ein dem Außenraum zugewandtes Außenteil (20) sowie ein zwischen diesem und dem Gassack angeordnetes Innenteil (22) aufweist, zwischen denen die Schaltfolie (24) angeordnet ist.

3. Gassack-Modul nach Anspruch 2, **dadurch gekennzeichnet, daß** die Schaltfolie (24) seitlich an der Abdeckung (16) befestigt ist.

4. Gassack-Modul nach einem der vorhergehenden Ansprüche, **dadurch gekennzeichnet, daß** die Schaltfolie (24) mit Ausgestaltungen (30) versehen ist, an denen ein Montagewerkzeug (40) angreifen kann.

5. Gassack-Modul nach Anspruch 4, **dadurch gekennzeichnet, daß** die Ausgestaltungen (30) für das Montagewerkzeug (40) gleichzeitig zum Befestigen der Schaltfolie (24) an der Abdeckung (16) dienen.

6. Schaltfolie eines Gassack-Moduls nach einem der Ansprüche 1 und 2, **dadurch gekennzeichnet, daß** sie mit mindestens einer Montagelasche (50) versehen ist, die von der Schaltfolie (24) abtrennbar ist.

7. Schaltfolie nach Anspruch 6, **dadurch gekennzeichnet, daß** die Montagelasche (50) über eine Sollbruchstelle (52) mit der Schaltfolie (24) verbunden ist.

## Claims

1. A gas bag module for a vehicle steering wheel, comprising a gas bag, a gas bag cover (16) and a switching foil (24) removably arranged in the latter, **characterized in that** the switching foil (24) is attached to the gas bag module (10) so as to be accessible from outside, so that the switching foil (24) can be replaced without the gas bag cover (16) having to be dismantled.

2. The gas bag module according to claim 1, **characterized in that** the cover (16) has an external part (20) facing the exterior, as well as an internal part (22) located between this external part and the gas bag, the switching foil (24) being located between them.

3. The gas bag module according to claim 2, **characterized in that** the switching foil (24) is laterally attached to the cover (16).

4. The gas bag module according to any of the preceding claims, **characterized in that** the switching foil (24) is provided with configurations (30) on which an installation tool (40) can engage.

5. The gas bag module according to claim 4, **characterized in that** the configurations (30 for the installation tool (40) at the same time serve to attach the switching foil (24) to the cover (16).

6. A switching foil for a gas bag module according to any of claims 1 and 2, **characterized in that** it is provided with at least one mounting bracket (50) which can be separated from the switching foil (24)

7. The switching foil according to claim 6, **characterized in that** the mounting bracket (50) is connected with the switching foil (24) by means of a predetermined breaking point (52).

## Revendications

1. Module de coussin à gaz pour un volant de véhicule, comprenant un coussin à gaz, un couvercle de coussin à gaz (16) et une pellicule de commutation (24) disposée de façon amovible dans celui-ci, **caractérisé en ce que** la pellicule de commutation (24) est fixée au couvercle de coussin à gaz (16) avec possibilité d'accès depuis l'extérieur, de sorte que la pellicule de commutation (24) peut être remplacée sans démonter le coussin à gaz (16).

2. Module de coussin à gaz selon la revendication 1, **caractérisé en ce que** le couvercle (16) comporte une partie extérieure (20), tournée vers l'extérieur, et une partie intérieure (22), disposée entre la précédente et le coussin à gaz, entre lesquelles est disposée la pellicule de commutation (24).

3. Module de coussin à gaz selon la revendication 2, **caractérisé en ce que** la pellicule de commutation (24) est fixée latéralement au couvercle (16).

4. Module de coussin à gaz selon l'une des revendications précédentes, **caractérisé en ce que** la pellicule de commutation (24) est pourvue de moyens (30) sur lesquels peut s'engager un outil de pose (40).

5. Module de coussin à gaz selon la revendication 4, **caractérisé en ce que** les moyens (30) destinés à l'outil de pose (40) servent simultanément à fixer la pellicule de commutation (24) au couvercle (16).

6. Pellicule de commutation d'un module de coussin à gaz selon l'une ou l'autre des revendications 1 et 2, **caractérisée en ce qu'**elle est pourvue d'au moins une patte de pose (50) qui peut être détachée de la pellicule de commutation (24).

7. Pellicule de commutation selon la revendication 6, **caractérisée en ce que** la patte de pose (50) est reliée à la pellicule de commutation (24) par un point destiné à la rupture (52).
